# EUROPEAN PATENT APPLICATION

(11) **EP 4 769 599 A1**
(43) Date of publication of application: **01.07.2026**
(21) Application number: 25837478.4
(22) Date of filing: 04.07.2025
(51) Int. Cl.: H01M 10/04, H01M 4/04, H01M 10/44, B30B 15/04, B30B 15/06

(54) **TORQUE-SENSITIVE AUTOMATIC PRESSURE ADJUSTMENT PRESSING JIG**

(30) Priority: 08.07.2024 KR 20240089761
(71) Applicant: LG Energy Solution, Ltd., Seoul 07335 (KR)
(72) Inventor: AN, Tai Wook, Daejeon 34122 (KR); BAE, Sang Geun, Daejeon 34122 (KR)
(74) Representative: Goddar, Heinz J.
(86) International application number: PCT/KR2025/009568
(87) International publication number: WO 2026/014814

(57) **Abstract**

Disclosed herein is an automatic pressure adjustment pressing jig that includes a reaction plate and a driving plate facing each other, and a plurality of pressing plates arranged to enable linear movement between the reaction plate and the driving plate, and pouch batteries inserted between the pressing plates are pressurized by a pressure applied as the driving plate moves toward the reaction plate, and the driving plate retracts in predetermined units by a torque-responsive adjustment device that automatically attenuates increased torque in response to a torque increase corresponding to increased pressure caused by expansion of the pressurized pouch batteries.

## Description

### [Technical Field]

The present disclosure relates to a pressing jig used in the activation process of pouch batteries, and more particularly, to a pressing jig capable of automatically adjusting a pressing force in response to an increase in internal pressure of the pouch batteries during the activation process without electrical control of a load cell and a servo motor.

This application claims the benefit of priority from Korean Patent Application No. 10-2024-0089761, filed on July 08, 2024, the entire contents disclosed therein are incorporated by reference into this disclosure.

### [Background]

With the increasing technological development and demand for mobile devices, the demand for secondary batteries as energy sources is rapidly increasing, and accordingly, extensive research is being conducted on secondary batteries that can meet various requirements.

In terms of battery shape, there is high demand for prismatic secondary batteries and pouch-type secondary batteries that can be applied to products such as mobile phones due to their thin thickness, and in terms of materials, there is high demand for lithium secondary batteries such as lithium-ion batteries and lithium-ion polymer batteries that have advantages such as high energy density, discharge voltage, and output stability.

Among various types of secondary batteries, pouch-type secondary batteries have higher energy density per unit weight and volume, and not only enable thinning and weight reduction of batteries, but also have many advantages such as lower material costs for pouches as exterior materials, so their development is still actively ongoing.

To briefly summarize the manufacturing process of such pouch-type secondary batteries, first, a positive electrode plate and a negative electrode plate are manufactured, and an electrode assembly is fabricated by interposing and stacking a separator between them. In the electrode assembly, electrode leads electrically connected to the positive electrode plate and the negative electrode plate protrude to the outside of the pouch case. After the electrode assembly is embedded in the pouch case, electrolyte is injected into the pouch case to impregnate the electrode assembly with the electrolyte. After the electrolyte is injected, the edge of the pouch case is sealed by heat fusion.

Then, the sealed pouch-type secondary battery undergoes a pressurized activation process (pre-formation process) in which the pouch is pressurized and activated to ensure that the electrolyte filled inside the pouch is evenly spread, an aging process to stabilize the secondary battery, and a charge-discharge process (formation process) to activate the secondary battery.

In the pressurized activation process, the pouch-type secondary battery can be activated under pressure so that the electrolyte is evenly distributed inside the pouch case and the electrode assembly is sufficiently impregnated with the electrolyte. The device used here is a pressurized activation device, and such a pressurized activation process is also called jig formation. By the pressurized activation device, the pouch-type secondary battery is subjected to charge-discharge and voltage measurement through the electrode leads while being pressurized by the pressing jig.

The pressurized activation device includes a plurality of pressing plates for pressurizing the pouch-type secondary batteries, and the pouch-type secondary batteries are inserted between the pressing plates. As a driving plate moving by power presses the outermost adjacent pressing plate, the plurality of pressing plates linearly move sequentially along the guide, and finally abut against a reaction plate on the opposite side of the driving plate. The driving plate moves until it reaches a predetermined pressure, thereby pressurizing the pouch-type secondary batteries between the pressing plates. Then, lead grippers coupled to both ends of the pressing plates are brought into close contact with the electrode leads protruding out of the pouch case, and charge-discharge and voltage measurement are performed. Such a pressurized activation device has the advantage of being able to perform the pressurized activation process on a plurality of pouch-type secondary batteries at once. Reference may be made to Korean Patent Publication No. 10-2023-0068702 (published on May 18, 2023).

However, in the operation of the pressurized activation device, a servo motor is used for the movement of the driving plate, and to readjust to an appropriate pressure against the pressure increase due to the swelling phenomenon during the activation process, a load cell to measure the pressure is required, and a controller to control the operation of the servo motor in response to the pressure measured by the load cell is required. Since such an electrical control configuration of the servo motor and load cell must be provided in each pressurized activation device, a large initial investment is required.

### [Summary]

### [Technical Problem]

The present disclosure relates to a pressing jig provided in a pressurized activation device for pouch batteries, and an object thereof is to provide a pressing jig capable of automatically adjusting a pressing force in response to an increase in internal pressure of the pouch batteries during the activation process without electrical control of a load cell and a servo motor.

However, the technical problem to be solved by the present disclosure is not limited to the above-described problem, and other problems not mentioned can be clearly understood by a person skilled in the art from the description of the disclosure described below.

### [Technical Solution]

The present disclosure relates to an automatic pressure adjustment pressing jig, and in one example, includes a reaction plate and a driving plate facing each other, and a plurality of pressing plates arranged to enable linear movement between the reaction plate and the driving plate, wherein pouch batteries inserted between the pressing plates are pressurized by a pressure applied as the driving plate moves toward the reaction plate, and the driving plate retracts in predetermined units by a torque-responsive adjustment device that automatically attenuates increased torque in response to a torque increase corresponding to increased pressure caused by expansion of the pressurized pouch batteries.

The torque-responsive adjustment device may be provided on the driving plate.

In one embodiment, the torque-responsive adjustment device may include a torque converter that converts pressure acting on the driving plate into torque, and a ratchet mechanism that resists the torque exerted by the torque converter to prevent retraction of the driving plate.

For example, the torque converter may include a cam supported by a rotating shaft and having a plurality of slip grooves formed along a circumferential surface, a roller engaged with the slip grooves of the cam, and a preload adjuster including a spring that elastically presses the roller.

The ratchet mechanism may include a ratchet wheel sharing the rotating shaft of the cam and having a plurality of claws provided along a circumferential surface, and a pawl having teeth with which the claws of the ratchet wheel are engaged, wherein the pawl is fixedly installed separately from the movement of the driving plate.

For torque below the preload applied to the roller by the spring, rotation of the cam is prevented, and accordingly the claws of the ratchet wheel maintain an engaged state with the teeth of the pawl.

When torque exceeding the preload applied to the roller acts, rotation of the cam occurs, and accordingly the engagement between the claws of the ratchet wheel and the teeth of the pawl is released and the driving plate retracts, and as the torque acting on the cam is reduced below the preload applied to the roller by the retraction of the driving plate, rotation of the cam is prevented again.

The predetermined unit by which the driving plate retracts may correspond to an interval between the slip grooves formed in plurality along the circumferential surface of the cam.

The preload adjuster may include an adjustment knob that adjusts the preload of the spring that elastically presses the roller.

The preload of the spring that elastically presses the roller may be set to a value corresponding to an upper limit value of a pressing force allowed for the pouch batteries inserted between the pressing plates.

Meanwhile, the automatic pressure adjustment pressing jig of the present disclosure may further comprise a pressing station including a servo motor that pressurizes and moves the driving plate, and a load cell that measures pressure applied to the driving plate by the servo motor.

The pressing station may preferably be an independent station that can be freely connected to and separated from the driving plate.

The pressing station may be shared by a plurality of automatic pressure adjustment pressing jigs.

### [Advantageous Effects]

According to the automatic pressure adjustment pressing jig of the present disclosure having the above configuration, by providing a torque-responsive adjustment device that automatically attenuates increased torque in response to a torque increase corresponding to increased pressure caused by the swelling phenomenon of pressurized pouch batteries, it becomes unnecessary to install a configuration of a servo motor, load cell, and controller for the pressing operation of the driving plate and for relieving excess pressure during pressurization in each individual pressurized activation device. Therefore, the burden of initial investment required to install a plurality of pressurized activation devices can be reduced.

In addition, the torque-responsive adjustment device provided in the present disclosure can be implemented as a mechanical mechanism that does not require electrical or electronic control, thereby further reducing the initial investment cost for a plurality of pressurized activation devices.

However, the technical effects that can be obtained through the present disclosure are not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a view illustrating the overall configuration of a pressurized activation device according to the prior art.
FIG. 2 is a view illustrating the configuration of a pressing jig according to an embodiment of the present disclosure.
FIG. 3 is a view illustrating a state when torque below the preload acts on the pressing jig of FIG. 2.
FIG. 4 is a view illustrating a state at the moment when torque exceeding the preload acts on the pressing jig of FIG. 2.
FIG. 5 is a view illustrating a stationary state after retraction of the driving plate.
FIG. 6 and FIG. 7 are views illustrating an example of setting the driving plate to a pressurized state using a pressing station.

In some of the attached drawings, corresponding components are given the same reference numerals. A person skilled in the art understands that the drawings illustrate elements simply and clearly and are not necessarily drawn to scale. For example, to facilitate understanding of various embodiments, the dimensions of some elements shown in the drawings may be exaggerated compared to other elements. In addition, elements of well-known technologies that are useful or essential in commercially feasible embodiments may often not be depicted so as not to interfere with the purpose of various embodiments of the present disclosure.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to an automatic pressure adjustment pressing jig, and in one example, comprises a reaction plate and a driving plate facing each other, and a plurality of pressing plates arranged to enable linear movement between the reaction plate and the driving plate, wherein pouch batteries inserted between the pressing plates are pressurized by a pressure applied as the driving plate moves toward the reaction plate, and the driving plate retracts in predetermined units by a torque-responsive adjustment device that automatically attenuates increased torque in response to a torque increase corresponding to increased pressure caused by expansion of the pressurized pouch batteries.

According to the automatic pressure adjustment pressing jig of the present disclosure having the above configuration, by providing a torque-responsive adjustment device that automatically attenuates increased torque in response to a torque increase corresponding to increased pressure caused by the swelling phenomenon of pressurized pouch batteries, it becomes unnecessary to install a configuration of a servo motor, load cell, and controller for the pressing operation of the driving plate and for relieving excess pressure during pressurization in each individual pressurized activation device. Therefore, the burden of initial investment required to install a plurality of pressurized activation devices can be reduced.

In addition, the torque-responsive adjustment device provided in the present disclosure can be implemented as a mechanical mechanism that does not require electrical or electronic control, thereby further reducing the initial investment cost for a plurality of pressurized activation devices.

### [Detailed Description]

Hereinafter, specific embodiments of an automatic pressure adjustment pressing jig 100 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

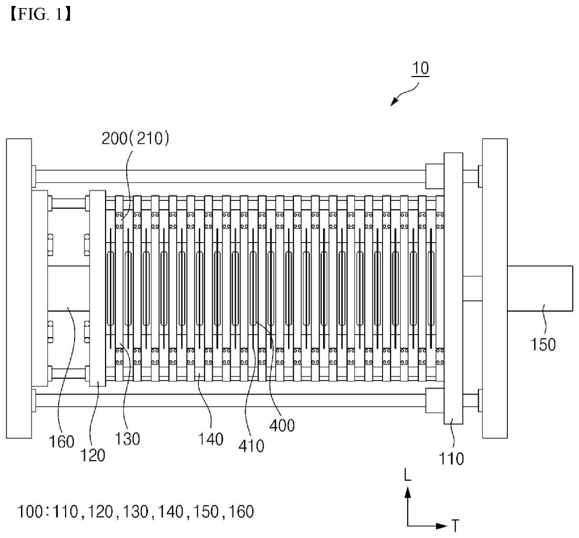

FIG. 1 is a view illustrating the overall configuration of a pressurized activation device 10 according to the prior art. The illustrated pressurized activation device 10 largely comprises a pressing jig 100 and a lead jig 200. The pressing jig 100 is a mechanism including a plurality of pressing plates 130 that apply pressure to both sides in the thickness direction T of a pouch battery 400, and the lead jig 200 is a mechanism that is in close contact with and electrically connected to electrode leads 410 protruding to one or both sides in the length direction L of the pouch battery 400 disposed between the pressing plates 130. Through the lead jig 200, charge-discharge and voltage measurement of the pouch battery 400 are performed.

The pressing jig 100 must be able to apply pressure on the order of several bars to the pouch battery 400 introduced into the activation process. To this end, the pressing jig 100 includes a power source 150 such as a servo motor. To apply pressure to both sides of the pressing plate 130, the pressing jig 100 includes a reaction plate 120 and a driving plate 110. The reaction plate 120 is fixedly installed on the pressing jig 100, and the driving plate 110 disposed on the opposite side of the reaction plate 120 outside the plurality of pressing plates 130 can move forward and backward by the power source 150, for example, a servo motor. The reaction plate 120 may be equipped with a load cell 160 for measuring the pressing force.

Between the reaction plate 120 and the driving plate 110, a plurality of pressing plates 130 connected to a plate guide 140 are spaced apart. The plurality of pressing plates 130 can freely linearly move along the plate guide 140. Therefore, when pouch batteries 400 are inserted one by one between the plurality of pressing plates 130 and the driving plate 110 moves toward the reaction plate 120, the outermost pressing plate 130 abuts against and is pushed by the driving plate 110. This movement of the pressing plate 130 occurs sequentially and cascading according to the movement of the driving plate 110, and finally, the pouch batteries 400 inserted between the plurality of pressing plates 130 are pressurized on both sides in the thickness direction T by the driving plate 110 and the reaction plate 120.

Here, in the present specification, the direction in which the pouch battery 400 is pressurized is referred to as the thickness direction T with respect to the pouch battery 400. In addition, the direction in which the electrode lead 410 protrudes from the pouch battery 400 is referred to as the length direction L. The thickness direction T and the length direction L are indicated by coordinate axes in FIG. 1. The electrode lead 410 of the pouch battery 400 may protrude to one or both sides in the length direction L depending on the specifications of the secondary battery, and in the drawings, it is exemplarily shown as a bidirectional secondary battery in which the electrode lead 410 protrudes to both sides in the length direction L.

The pressing jig 100 corresponds to a mechanism that applies pressure to the pouch battery 400, and the lead jig 200 is a mechanism that is in close contact with and electrically connected to the electrode leads 410 protruding to one or both sides in the length direction L of the pouch battery 400. In the illustrated embodiment, the lead jig 200 comprises gripper units 210 coupled to both sides of the pressing plate 130. The gripper unit 210 is a unit including terminals for performing charge-discharge on the pouch battery 400, and is electrically connected to the pouch battery 400 by pressing the electrode lead 410 from both sides accompanying the movement of the pressing plate 130.

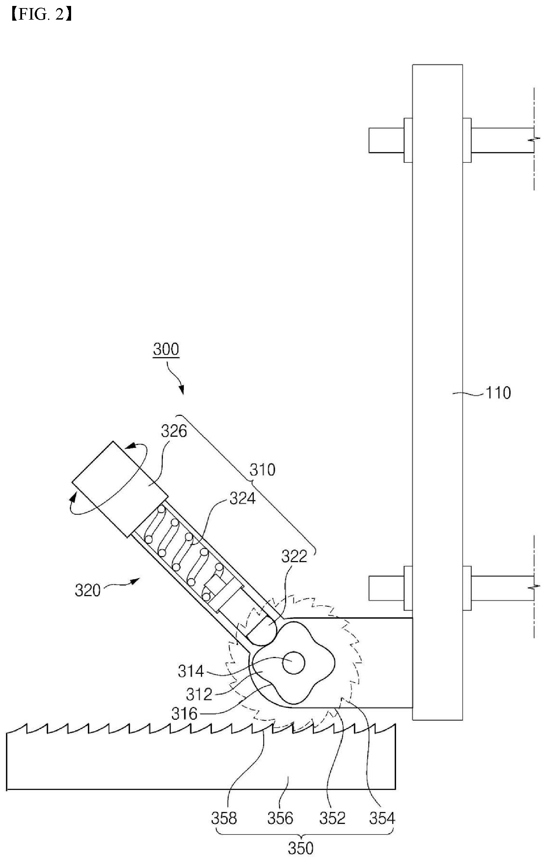

FIG. 2 is a view illustrating the configuration of a pressing jig 100 according to an embodiment of the present disclosure. The pressingjig 100 of FIG. 2 can be called an automatic pressure adjustment pressing jig 100, and is illustrated focusing on the portion corresponding to the pressing jig 100 in the pressurized activation device 10 of FIG. 1, particularly on the driving plate 110. Therefore, unless there is additional content in the following description, it can be understood that the pressing jig 100 of FIG. 2 is applied to the pressurized activation device 10 of FIG. 1.

Referring to FIG. 2, the pressing jig 100 of the present disclosure comprises a reaction plate 120 and a driving plate 110 facing each other, and a plurality of pressing plates 130 arranged to enable linear movement between the reaction plate 120 and the driving plate 110. As described above, the pouch batteries 400 inserted between the pressing plates 130 are pressurized by the pressure applied as the driving plate 110 moves toward the reaction plate 120.

Here, the pressing jig 100 of the present disclosure is configured such that when the pressure acting on the pouch battery 400 increases beyond the initially set value due to the expansion of the pressurized pouch battery 400, that is, the swelling phenomenon that occurs as the initial charge-discharge cycle progresses, in response to a torque increase corresponding to the increased pressure, the driving plate 110 creating the pressurized state retracts by a predetermined unit (distance) by a torque-responsive adjustment device 300 that automatically attenuates the increased torque.. In other words, in the pressing jig 100 of FIG. 2, the driving plate 110 automatically retracts by a predetermined unit in response to the excess pressure, and the retract of the driving plate 110 reduces the pressure applied to the pouch battery 400 inserted between the pressing plates 130.

In the pressing jig 100 of the present disclosure, the reaction plate 120 may be configured to be fixed at the initial pressing position, while the driving plate 110 performs the automatic retracting motion in response to the excess pressure. In this operation, providing the torque-responsive adjustment device 300 on the driving plate 110 may simplify the design. Alternatively, although not shown in the drawings, the torque-responsive adjustment device 300 may be provided on the reaction plate 120, with the driving plate 110 fixed at the initial pressing position. However, as in the embodiment shown in the drawings, it may be advantageous from a design perspective to configure such that the reaction plate 120 is always fixed while only the driving plate 110 is movable.

In one embodiment, the torque-responsive adjustment device 300 may be configured as a mechanical mechanism. Specifically, the torque-responsive adjustment device 300 may include a torque converter 310 that converts the pressure acting on the driving plate 110 into torque, and a ratchet mechanism 350 that resists the torque applied by the torque converter 310 to prevent the retract of the driving plate 110.

The torque converter 310 may include a cam 312 supported by a rotating shaft 314 and having a plurality of slip grooves 316 formed along the circumferential surface. The torque converter 310 may include a preload adjuster 320 having a roller 322 engaged with the slip grooves 316 of the cam 312 and a spring 324 elastically pressing the roller 322. The roller 322 elastically presses the slip grooves 316 of the cam 312 by the elastic force of the spring 324, and the force with which the roller 322 presses the slip grooves 316 corresponds to the preload stored in the compressed spring 324.

In addition, the ratchet mechanism 350 may include a ratchet wheel 352 sharing the rotating shaft 314 of the cam 312 and having a plurality of claws 354 along the circumferential surface, and a pawl 356 having teeth 358 engaged with the claws 354 of the ratchet wheel 352. The pawl 356 is fixedly installed separately from the movement of the driving plate 110.

According to the torque-responsive adjustment device 300, if there were no preload adjuster 320, the pressure acting on the driving plate 110 would be directed toward the left side in the drawing, so the cam 312 and the ratchet wheel 352 would receive a torque tending to rotate counterclockwise; however, the claws 354 of the ratchet wheel 352 and the teeth 358 of the pawl 356 cannot prevent the leftward movement of the driving plate 110. In other words, by the combination of the cam 312 and the ratchet mechanism 350, the pressure acting on the driving plate 110 is converted into torque of the cam 312 and the ratchet wheel 352 sharing the rotating shaft 314.

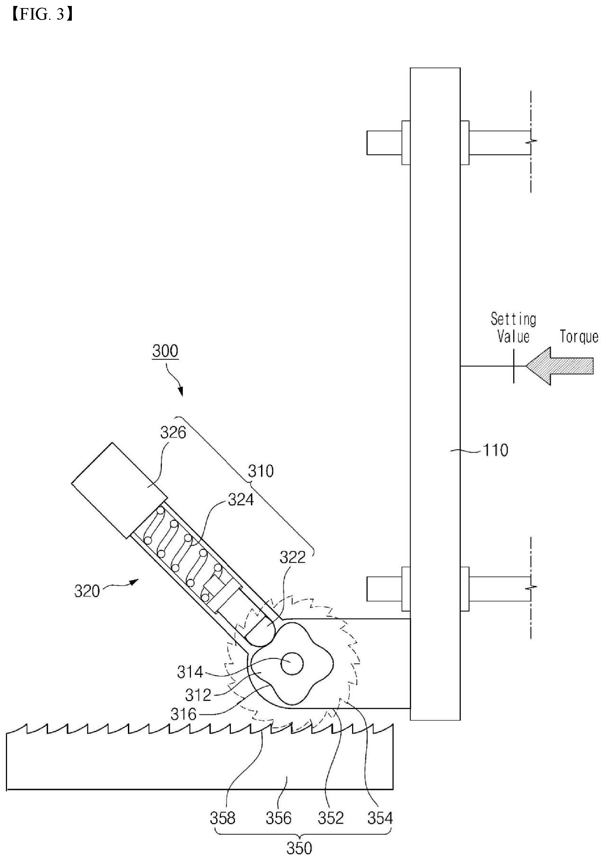

The torque-responsive adjustment device 300 includes the preload adjuster 320 that prevents the rotation of the cam 312 for forces below the preload stored in the spring 324. Accordingly, for torques below the preload applied to the roller 322 by the spring 324, the cam 312 and the ratchet wheel 352 sharing the rotating shaft 314 cannot rotate, and the claws 354 of the ratchet wheel 352 remain engaged with the teeth 358 of the pawl 356. In other words, the driving plate 110 remains stationary. FIG. 3 is a diagram illustrating the state when a torque below the preload acts on the pressing jig 100.

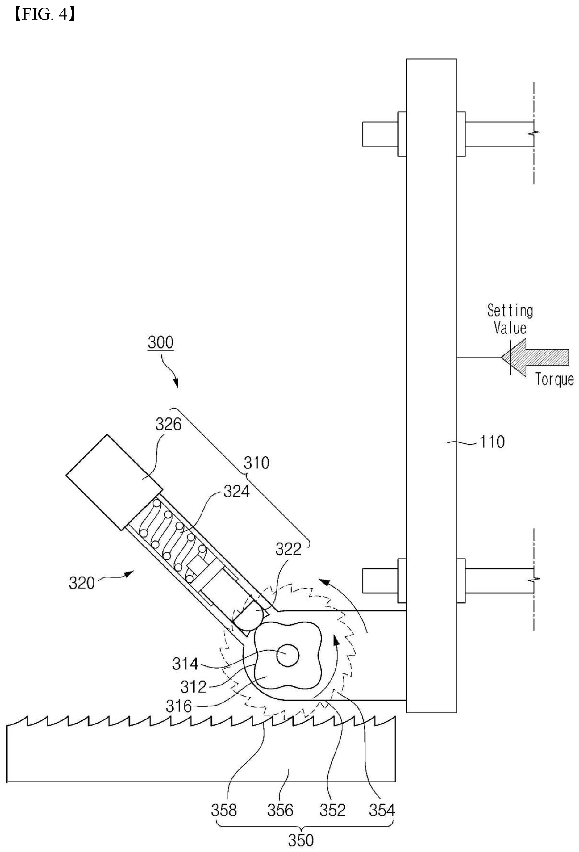

On the other hand, when a torque exceeding the preload applied to the roller 322 pressing the slip groove 316 acts, the cam 312 rotates counterclockwise, overcoming the force of the roller 322. Referring to FIG. 4, as the cam 312 rotates, the ratchet wheel 352 also rotates counterclockwise, and the counterclockwise rotation of the ratchet wheel 352 is not obstructed by the pawl 356. Therefore, along with the counterclockwise rotation of the ratchet wheel 352, the driving plate 110 retracts.

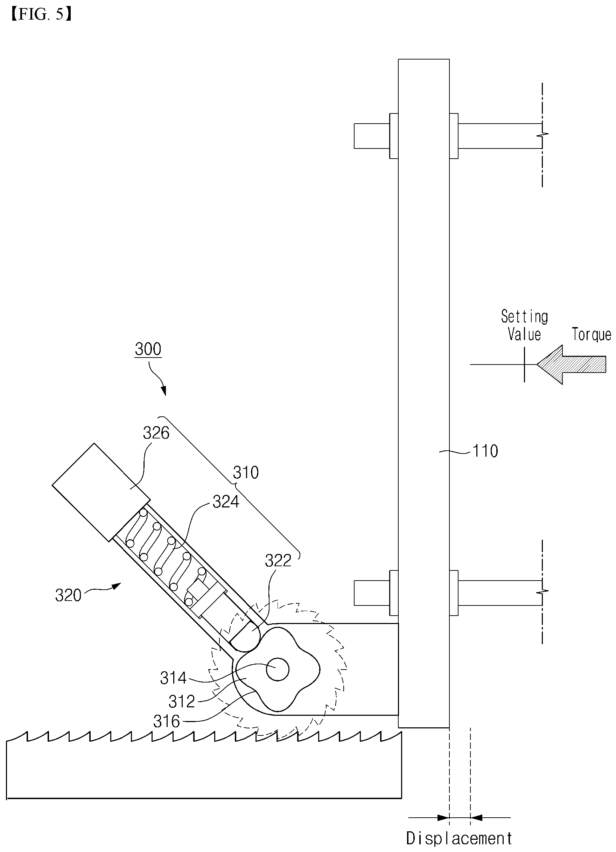

The retraction of the driving plate 110 relieves the pressure pressurizing the pouch battery 400, and with the relief of pressure, the torque acting on the cam 312 also decreases. The decrease in the acting torque causes the roller 322 of the preload adjuster 320 to press the slip groove 316 of the cam 312 again to stop further rotation. FIG. 5 is a view illustrating a stationary state after retraction of the driving plate 110, and when pressure relief above a certain level is achieved by the retraction of the driving plate 110, the driving plate 110 stops again.

The predetermined unit by which the driving plate 110 retracts can be designed to correspond to the interval between the slip grooves 316 formed in plurality along the circumferential surface of the cam 312. That is, it can be designed so that the amount of pressure drop when the slip grooves 316 of the cam 312 pass the roller 322 one by one can restore a certain amount exceeding the initial pressing force set for the pouch battery 400 back to the initial pressing force level.

Meanwhile, the preload adjuster 320 may include an adjustment knob 326 that adjusts the preload of the spring 324 that elastically presses the roller 322. The adjustment knob 326 may be provided at a protruding end of the preload adjuster 320, and the preload acting on the spring 324 can be increased or decreased by forward and backward movement by rotation of the adjustment knob 326. Therefore, by operating the adjustment knob 326, the force of the roller 322 pressing the slip groove 316 of the cam 312 can be adjusted. That is, when the preload of the spring 324 is reduced with the adjustment knob 326, the driving plate 110 starts retraction at a lower pressure, and conversely, when the preload of the spring 324 is increased with the adjustment knob 326, the driving plate 110 retracts only at a higher pressure.

In this method, by configuring the preload adjuster 320 to be variable, the pressing jig 100 of the present disclosure can be applied to the activation process of pouch batteries 400 of various specifications. For example, the preload of the spring 324 that elastically presses the roller 322 can be adjusted to a value corresponding to the upper limit value of the pressing force allowed (set) for the pouch batteries 400 inserted between the pressing plates 130. By adjusting the preload of the spring 324 in this method, even if the pressing force on the pouch battery 400 exceeds the allowable range due to the swelling phenomenon during the activation process, the driving plate 110 automatically retracts by a certain distance by the torque-responsive adjustment device 300, so that the pressing force on the pouch battery 400 always remains below the upper limit value of the allowable range.

### [second embodiment]

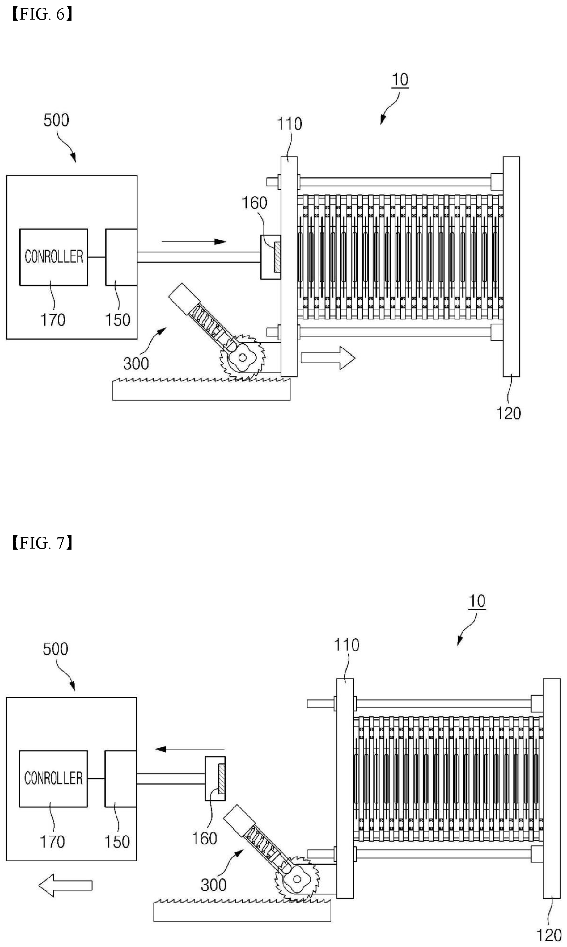

The automatic pressure adjustment pressing jig 100 of the present disclosure may further comprise a pressing station 500 including a servo motor 150 that pressurizes and moves the driving plate 110, and a load cell 160 that measures the pressure applied to the driving plate 110 by the servo motor 150. FIG. 6 and FIG. 7 are views illustrating an example of setting the driving plate 110 to a pressurized state using the pressing station 500.

The pressing station 500 may be provided to omit components such as the servo motor 150, load cell 160, and controller 170 from the pressurized activation device 10 including the pressing jig 100 described with reference to FIGS. 2 to 5. To this end, the pressing station 500 can be configured as an independent station that can be freely connected to and separated from the driving plate 110. In addition, the pressing station 500 configured independently can be shared by a plurality of automatic pressure adjustment pressing jigs 100, thereby reducing the investment required to install a plurality of pressurized activation devices 10.

FIG. 6 is a view illustrating the initial process of moving the driving plate 110 using the pressing station 500 and setting the pressing force on the plurality of pouch batteries 400 disposed between the pressing plates 130.

In this state, in the pressing jig 100 described in the first embodiment, the preload of the spring 324 that elastically presses the roller 322 may be substantially released. The unidirectional rotation allowed by the ratchet mechanism 350 corresponds to the direction in which the pressing station 500 applies pressure to the driving plate 110 to move it. That is, based on FIG. 6, the ratchet mechanism 350 does not cause any obstruction to the driving plate 110 moving to the right. Therefore, the driving plate 110 can move smoothly to the right.

The driving plate 110 moves to the right by the pressing station 500, and since the reaction plate 120 is fixed, the plurality of pressing plates 130 pressurize the pouch batteries 400 inserted between them. The pressure (pressure acting on the pouch batteries) increasing by the movement of the driving plate 110 is measured by the load cell 160 provided in the pressing station 500, and the controller 170 provided in the pressing station 500 receives the measured value of the load cell 160 and controls the operation of the servo motor 150.

FIG. 7 is a view illustrating a state in which the pressing position of the driving plate 110 is set and fixed by the pressing station 500. When the value measured through the load cell 160 is confirmed as the appropriate pressing force of the pouch battery 400, the operation of the servo motor 150 is stopped. In this state, in the pressing jig 100 described in the first embodiment, the preload of the spring 324 that elastically presses the roller 322 is set to a value corresponding to the upper limit value of the pressing force allowed for the pouch battery 400.

The pressure that the pressing station 500 applies to the pouch battery 400 may be set to be less than the preload set in the torque-responsive adjustment device 300, that is, less than the upper limit value of the pressing force allowed for the pouch battery 400. Therefore, the driving plate 110 maintains a stopped state by the ratchet mechanism 350 even if the pressing station 500 is separated. Even if the pressing station 500 applies slightly excessive pressure than intended and then separates from the driving plate 110, the driving plate 110 will automatically retract to an appropriate level by the torque-responsive adjustment device 300. Therefore, the torque-responsive adjustment device 300 can also serve as a kind of safety device that protects the pressing jig 100 and further the pouch battery 400 from excessive pressure.

The pressing position of the driving plate 110 set in this method is mechanically fixed by the ratchet mechanism 350, and the position of the reaction plate 120 does not change during the activation process, but the pressing force on the pouch battery 400 is maintained at an appropriate level as the driving plate 110 retracts in predetermined units by the torque-responsive adjustment device 300.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that there may be various equivalents and modifications that can replace them at the time of filing of this application.

**[Description of Reference Numerals]**

| | | | |
|---|---|---|---|
| 10: | pressurized activation device | 100: | pressing jig |
| 110: | driving plate | 120: | reaction plate |
| 130: | pressing plate | 140: | plate guide |
| 150: | power source (servo motor) | 160: | load cell |
| 170: | controller | 200: | lead jig |
| 210: | gripper unit | 300: | torque-responsive adjustment device |
| 310: | torque converter | 312: | cam |
| 314: | rotating shaft | 316: | slip groove |
| 320: | preload adjuster | 322: | roller |
| 324: | spring | 326: | adjustment knob |
| 350: | ratchet mechanism | 352: | ratchet wheel |
| 354: | claw | 356: | pawl |
| 358: | tooth | 400: | pouch battery |
| 410: | electrode lead | 500: | pressing station |
| T: | thickness direction | L: | length direction |

## Claims

1. An automatic pressure adjustment pressing jig comprising:
a reaction plate and a driving plate facing each other; and
a plurality of pressing plates arranged to enable linear movement between the reaction plate and the driving plate,
wherein pouch batteries inserted between the pressing plates are pressurized by a pressure applied as the driving plate moves toward the reaction plate, and
wherein the driving plate retracts in predetermined units by a torque-responsive adjustment device that automatically attenuates increased torque in response to a torque increase corresponding to increased pressure caused by expansion of the pressurized pouch batteries.

2. The automatic pressure adjustment pressing jig of claim 1, wherein the torque-responsive adjustment device is provided on the driving plate.

3. The automatic pressure adjustment pressing jig of claim 2, wherein the torque-responsive adjustment device comprises:
a torque converter that converts pressure acting on the driving plate into torque; and
a ratchet mechanism that resists the torque exerted by the torque converter to prevent retraction of the driving plate.

4. The automatic pressure adjustment pressing jig of claim 3, wherein the torque converter comprises:
a cam supported by a rotating shaft and having a plurality of slip grooves formed along a circumferential surface;
a roller engaged with the slip grooves of the cam; and
a preload adjuster comprising a spring that elastically presses the roller.

5. The automatic pressure adjustment pressing jig of claim 4, wherein the ratchet mechanism comprises:
a ratchet wheel sharing the rotating shaft of the cam and having a plurality of claws provided along a circumferential surface; and
a pawl fixedly installed separately from the movement of the driving plate and comprising teeth with which the claws of the ratchet wheel are engaged.

6. The automatic pressure adjustment pressing jig of claim 5, wherein for torque below a preload applied to the roller by the spring, rotation of the cam is prevented, and accordingly the claws of the ratchet wheel maintain an engaged state with the teeth of the pawl.

7. The automatic pressure adjustment pressing jig of claim 6, wherein when torque exceeding the preload applied to the roller acts, rotation of the cam occurs, and accordingly the engagement between the claws of the ratchet wheel and the teeth of the pawl is released and the driving plate retracts, and as the torque acting on the cam is reduced below the preload applied to the roller by the retraction of the driving plate, rotation of the cam is prevented again.

8. The automatic pressure adjustment pressing jig of claim 7, wherein the predetermined units by which the driving plate retracts correspond to an interval between the slip grooves formed in plurality along the circumferential surface of the cam.

9. The automatic pressure adjustment pressing jig of any one of claim 4 to claim 8, wherein the preload adjuster comprises an adjustment knob that adjusts the preload of the spring that elastically presses the roller.

10. The automatic pressure adjustment pressing jig of claim 9, wherein the preload of the spring that elastically presses the roller is set to a value corresponding to an upper limit value of a pressing force allowed for the pouch batteries inserted between the pressing plates.

11. The automatic pressure adjustment pressing jig of claim 1, further comprising a pressing station comprising a servo motor that pressurizes and moves the driving plate, and a load cell that measures pressure applied to the driving plate by the servo motor.

12. The automatic pressure adjustment pressing jig of claim 11, wherein the pressing station is an independent station that is freely connected to and separated from the driving plate.

13. The automatic pressure adjustment pressing jig of claim 12, wherein the pressing station is shared by a plurality of automatic pressure adjustment pressing jigs.
